# EUROPÄISCHE PATENTSCHRIFT

(11) **EP 4 360 896 B1**
(45) Veröffentlichungstag und Bekanntmachung des Hinweises auf die Patenterteilung: **17.09.2025**
(21) Anmeldenummer: 23205248.0
(22) Anmeldetag: 23.10.2023
(51) Int. Cl.: B41J 3/407, B29C 45/00

(54) **VERFAHREN ZUM AUFDRUCKEN EINES DRUCKBILDES AUF EINEN KUNSTSTOFFBEHÄLTER UND ENTSPRECHENDES SYSTEM**
METHOD FOR PRINTING A PRINTED IMAGE ONTO A PLASTIC CONTAINER AND CORRESPONDING SYSTEM
PROCÉDÉ D'IMPRESSION D'UNE IMAGE IMPRIMÉE SUR UN RÉCIPIENT EN PLASTIQUE ET SYSTÈME CORRESPONDANT

(30) Priorität: 25.10.2022 DE 102022128205
(43) Veröffentlichungstag der Anmeldung: 01.05.2024
(73) Patentinhaber: BITO-Lagertechnik Bittmann GmbH, 55590 Meisenheim (DE)
(72) Erfinder: RIEMENSCHNITTER, Lars, 67827 Becherbach (DE)
(74) Vertreter: Richardt Patentanwälte PartG mbB

(56) Entgegenhaltungen:
- US-A1- 2006 144 261
- US-A1- 2012 017 783
- US-A1- 2013 056 482
- US-A1- 2013 107 293
- US-A1- 2016 167 395
- US-A1- 2018 251 266

## Beschreibung

Die vorliegende Erfindung betrifft ein Verfahren zum Aufdrucken eines Druckbildes auf einen durch Spritzgießen hergestellten Kunststoffbehälter, beispielsweise Kunststoffbehälter für den Transport und die Lagerung von Industrieware, werden häufig durch Spritzgussverfahren hergestellt. Unter Spritzgießen wird ein Herstellungsverfahren für die Herstellung eines neuen Produkts aus Kunststoffgranulat verstanden. Dabei wird heiße, zähflüssige Kunststoffschmelze mit hoher Kraft in eine Form gepresst, wobei der Kunststoff seine Form nach der Entnahme aus der Form und dem Abkühlen beibehält.

Zudem werden derartige Kunststoffbehälter häufig mit Informationen versehen, beispielsweise um den Kunststoffbehältern ein bestimmtes, beispielsweise herstellerspezifisches Design zu verleihen und/oder diese mit einem Barcode oder einer Seriennummer zu versehen. Das Aufbringen der Informationen auf die Kunststoffbehälter erfolgt dabei für gewöhnlich nach der Herstellung derselben, wobei ein entsprechend bedrucktes Etikett beziehungsweise ein entsprechend bedruckter Aufkleber auf den Kunststoffbehälter geklebt wird, und wobei zunächst eine hinreichende Abkühlung des Kunststoffbehälters erforderlich ist, um ein Ablösen des Klebers und/oder eine Bildung von Blasen zu vermeiden. Das führt außerdem dazu, dass derartige Etiketten beziehungsweise Aufkleber nicht on-the-fly variiert beziehungsweise individualisiert werden können. Folglich besteht Bedarf an verbesserten Verfahren zum Aufdrucken eines Druckbildes auf einen durch Spritzgießen hergestellten Kunststoffbehälter.

Die US 2016 0 167 395 A1 offenbart eine Anlage zum Herstellen und Bedrucken von becherförmigen Körpern mit einer Vorrichtung zum Herstellen von becherförmigen Körpern, die mindestens einen Teil aus Kunststoff aufweist, und einer Vorrichtung zum Positionieren der von der Vorrichtung hergestellten becherförmigen Körper auf einer Transfervorrichtung, die sich entlang einer Längstransferrichtung bewegen kann. Die becherförmigen Körper liegen mit ihrem unteren Rand auf einer Auflagefläche auf, die durch die Übergabevorrichtung mit ihrer zur Auflagefläche gerichteten Konkavität definiert ist. Die Anlage umfasst in der Verlängerung der Transferlängsrichtung eine Vorrichtung zum digitalen Bedrucken der becherförmigen Körper und ein Bauteil zur Steuerung der Position des oberen Randes der becherförmigen Körper auf der Auflagefläche, wobei das Bauteil mit der digitalen Druckvorrichtung verbunden ist.

Die US 2018 0 251 266 A1 offenbart einen Behälter zur Aufnahme von Karten, umfassend eine Basis mit einer Bodenwand und einer ersten Mehrzahl von Seitenwänden, die sich von der Bodenwand aus erstrecken, und einen Deckel, der relativ zur Basis zwischen einer offenen und einer geschlossenen Position beweglich ist. Der Deckel weist eine obere Wand und eine zweite Vielzahl von Seitenwänden auf, die sich von der oberen Wand aus erstrecken. Jede der zweiten Vielzahl von Seitenwänden ist im Allgemeinen mit einer entsprechenden der ersten Vielzahl von Seitenwänden ausgerichtet, wenn sich der Deckel in der geschlossenen Position befindet. Der Behälter umfasst ferner ein inneres Speichervolumen, das zumindest teilweise durch die untere Wand, die obere Wand und die erste und zweite Vielzahl von Seitenwänden definiert ist, und ein im Allgemeinen kontinuierliches Bild, das auf die erste und zweite Vielzahl von Seitenwänden gedruckt ist, so dass Teile des Bildes im Wesentlichen an den Schnittstellen zwischen benachbarten Seitenwänden ausgerichtet sind.

Die US 2012 0 017 783 A1 offenbart ein System zum digitalen Drucken direkt auf eine Vielzahl von Behältern. Das System umfasst eine Vorrichtung, die so konfiguriert ist, dass sie eine Anfangsposition oder -ausrichtung eines einzelnen Behälters bestimmt; eine Vielzahl von Druckköpfen, die so konfiguriert sind, dass sie direkt auf die Behälter drucken; und eine Vielzahl von Behälterhaltern, die so konfiguriert sind, dass sie einen einzelnen Behälter halten oder zurückhalten, den einzelnen Behälter drehen und eine Drehposition des einzelnen Behälters relativ zu mindestens einem Druckkopf beibehalten, während das Drucken erfolgt; und eine oder mehrere Aushärtungsvorrichtungen. Das System kann so konfiguriert sein, dass die mehreren Behälterhalter so konfiguriert sind, dass sie sich entlang einer linearen oder gekrümmten Bahn bewegen, und die mehreren Behälterhalter können so konfiguriert sein, dass sie sich steuerbar um eine Behälterachse drehen.

Die US 2006 0 144 261 A1 offenbart ein Verfahren zum Bedrucken von Kunststoffbehältern mit gekrümmten Oberflächen mit den folgenden Schritten: Bereitstellen einer Reihe von hohlen Kunststoffbehältern, Bewegen der Behälter entlang einer Bahn an einer ersten und einer zweiten digitalen Druckstelle vorbei und Bedrucken der gekrümmten Behälteroberflächen mit einem ersten und einem zweiten digitalen Bild, während der zu bedruckende Behälter unter Innendruck gehalten wird und während der zu bedruckende Behälter an beabstandeten Stellen fest gehalten wird.

Die US 2013 0 107 293 A1 offenbart ein Verfahren zum anpassbaren Bedrucken einer Mehrfachpackung von Artikeln, umfassend das Bereitstellen von Daten aus einer Datenbank; das elektronische Erzeugen von variablen Daten auf der Grundlage der Daten aus der Datenbank; das Bedrucken einer Vielzahl von Artikeln mit variablen Daten; und das Kombinieren der Vielzahl von ähnlichen Artikeln, um eine Mehrfachpackung von Artikeln zu bilden.

Die US 2013 0 056 482 A1 offenbart einen bedruckten Behälter zum Verpacken, insbesondere zum Verpacken von Produkten für Verkaufszwecke, insbesondere von Getränken, und ein entsprechendes Druckverfahren. Der Behälter weist mindestens einen seitlichen Wandabschnitt auf, in dem eine reliefartige Oberflächenkontur zu Dekorations- und/oder Markierungszwecken ausgeprägt ist. Durch das gezielte Bedrucken der reliefartigen Oberflächenkontur kann im Zusammenwirken der Reliefkontur mit dem Aufdruck ein optischer Eindruck des Behälters und/oder die Haptik der Oberflächenkontur beeinflusst werden.

Der vorliegenden Erfindung liegt somit die Aufgabe zugrunde, ein verbessertes Verfahren zum Aufdrucken eines Druckbildes auf einen durch Spritzgießen hergestellten Kunststoffbehälter anzugeben.

Gelöst wird diese Aufgabe durch den Gegenstand der nebengeordneten Ansprüche. Weitere vorteilhafte Weiterbildungen sind Gegenstand der abhängigen Ansprüche.

Beschrieben ist ein Verfahren zum Aufdrucken eines Druckbildes auf einen durch Spritzgießen hergestellten Kunststoffbehälter durch eine Druckvorrichtung, wobei die Druckvorrichtung eine Bewegungseinheit und mindestens einen Druckkopf aufweist, und wobei das Verfahren folgende Schritte aufweist: Bereitstellen eines durch Spritzgießen hergestellten Kunststoffbehälters; Empfangen eines auf den Kunststoffbehälter aufzudruckenden Druckbildes; Basierend auf dem bereitgestellten Druckbild, Ermitteln einer benötigten relativen Bewegung des Kunststoffbehälters und dem Druckkopf durch die Bewegungseinheit, welche benötigt wird, um das Druckbild durch die Druckvorrichtung auf den Kunststoffbehälter aufzudrucken; und Aufdrucken des bereitgestellten Druckbildes auf den Kunststoffbehälter durch den Druckkopf, wobei das Aufdrucken des Druckbildes ein Steuern der Bewegungseinheit basierend auf der ermittelten benötigten Bewegung aufweist.

Unter einem durch Spritzgießen hergestellten Kunststoffbehälter wird hierbei insbesondere ein Kunststoffbehälter, welcher bereits aus der entsprechenden Form beziehungsweise dem entsprechenden Formwerkzeug entnommen wurde, verstanden.

Unter einer Bewegungseinheit wird weiter eine Art mechanische Vorrichtung verstanden, welche z.B. programmierbar ist. Sie ist insbesondere derart eingerichtet, eine Relativbewegung von Behälter und Druckkopf durchzuführen. Die Bewegungseinheit kann hierbei mehrteilig ausgebildet sein. Sie kann z.B. einen Roboterarm aufweisen, an welchem der Drucckopf angeordnet ist. Sie kann zusätzlich oder alternativ einen Fördermechanismus aufweisen, welcher den Kunststoffbehälter zumindest teilweise zum Druckkopf bewegt oder an dem Druckkopf vorbeibewegt oder umgekehrt oder beides.

Unter einem Druckkopf wird ferner die Baugruppe beziehungsweise Einheit bezeichnet, welche z.B. die Düsen/Nozzlen der Druckvorrichtung aufweist, durch welche Drucktinte auf den Kunststoffbehälter gedruckt wird. Das Druckbild kann z.B. von einer Datenverarbeitungseinheit empfangen werden, welche das Druckbild statisch oder dynamisch, z.B. in Form einer sich ständig verändernden Druckinformation wie eine Seriennummer, zur Verfügung stellt.

Dadurch, dass die Druckvorrichtung die Bewegungseinheit aufweist, kann somit z.B. dynamisch für jeden einzelnen Druckvorgang eine Bildpunktadressierung innerhalb des entsprechenden Druckformats generiert werden, so dass bei Bedarf jedes Druckexemplar (Behälter) ein anderes Druckbild aufweisen kann, das heißt das Druckbild insbesondere durch ein Digitaldruckverfahren aufgebracht werden kann. Insbesondere ist es möglich, bei jedem Empfangen eines neuen Druckbildes die spezifisch für dieses Druckbild benötigte Relativbewegung zwischen dem Druckkopf und dem Kunststoffbehälter erneut zu ermitteln.

Unter einem Druckbild wird ferner eine durch ein Druckverfahren erzeugte Wiedergabe einer Vorlage verstanden.

Das Verfahren kann somit den Vorteil haben, dass das Druckbild durch ein Digitaldruckverfahren auf den durch ein Spritzgussverfahren hergestellten Kunststoffbehälter aufgebracht und somit bei Bedarf on-the-fly variiert und/oder individualisiert werden kann. Zudem ist eine vorherige hinreichende Abkühlung des Kunststoffbehälters, um ein Ablösen eines Klebers und/oder eine Bildung von Blasen beim Aufkleben eines das Druckbild aufweisenden Aufklebers zu vermeiden, nicht erforderlich. Mit z.B. Barcodeetiketten versehene Behälter lassen sich nicht, bzw. nur schwer recyceln (Etikett muss vor dem Einmahlen entfernt werden oder wenn es mit eingemahlen wird, muss die Schmelze später gründlich filtriert werden). Mit dem vorliegend beschriebenen Verfahren kann auch dieser Nachteil überwunden werden, da keine separaten Etiketten verwendet werden müssen.

Insgesamt wird somit ein verbessertes, gegebenenfalls auch schnelleres Verfahren zum Aufbringen eines Druckbildes auf einen durch Spritzgießen hergestellten Kunststoffbehälter angegeben.

Dabei kann der Schritt des Ermittelns der benötigten relativen Bewegung des Kunststoffbehälters und des Druckkopfes durch die Bewegungseinheit basierend auf dem bereitgestellten Druckbild und einer Oberflächengeometrie des Kunststoffbehälters erfolgen.

Unter der Oberflächengeometrie wird dabei eine Struktur beziehungsweise Form einer Außenfläche oder äußeren Oberfläche des Kunststoffbehälters, beziehungsweise einer Oberfläche des Kunststoffbehälters, auf welche das Druckbild aufgedruckt werden soll, verstanden. Hierdurch kann das Aufdrucken des Druckbildes weiter optimiert werden, zumal es bei Unebenheiten auf der zu bedruckenden Oberfläche des Kunststoffbehälters beispielsweise zu Verwirbelungen der aufgebrachten Druckfarbe kommen kann.

Insbesondere kann der Schritt des Ermittelns der benötigten relativen Bewegung ein Ermitteln der benötigten Bewegung derart umfassen, dass das bereitgestellte Druckbild nicht auf eine Außenfläche des Kunststoffbehälters aufgebrachte Rippen aufgedruckt wird. Unter Rippe wird dabei allgemein ein Stück Platte, mit dem ein anderes Bauteil stabiler gegen Verformen gemacht wird, verstanden. Die Rippen des Kunststoffbehälters dienen dabei insbesondere dazu, den Kunststoffbehälter zu verstärken.

Zusätzlich können auch Informationen über den bereitgestellten Kunststoffbehälter, und/oder Informationen über einen Typ der Bewegungseinheit, und/oder Vorgaben bezüglich Druckvarianten zum Ermitteln der benötigten Bewegung mittels der Bewegungseinheit herangezogen werden. Unter allgemeinen Informationen über den bereitgestellten Kunststoffbehälter werden dabei Informationen über Eigenschaften des Kunststoffbehälters, beispielsweise Abmessungen und/oder Materialien des Kunststoffbehälters verstanden. Unter Informationen über einen Typ der Bewegungseinheit werden weiter Informationen über Eigenschaften der Bewegungseinheit, beispielsweise eine Geometrie der Bewegungseinheit und/oder kinematische Eigenschaften der Bewegungseinheit verstanden. Unter Vorgaben bezüglich Druckvarianten werden zudem Vorgaben über Druckeigenschaften, beispielsweise Vorgaben, ob ein Farb- oder Schwarz-weiß-Druck erfolgen soll, oder Vorgaben über eine Farbqualität verstanden.

Insbesondere kann die benötigte Bewegung mittels der Bewegungseinheit somit auch optimal an die Eigenschaften des bereitgestellten Kunststoffbehälters und/oder der Bewegungseinheit selbst angepasst werden, wobei die benötigte Bewegung mittels der Bewegungseinheit auch derart ermittelt werden kann, dass Vorgaben bezüglich Druckvarianten beziehungsweise Druckeigenschaften eingehalten werden können.

Nach einer Ausführungsform umfasst das Verfahren ferner ein Abrufen einer ersten Information bezüglich des zu bedruckenden Kunststoffbehälters von einer Datenbank, wobei die erste Information einen Behältertyp und Angaben bezüglich des Druckbildes und optional Angaben bezüglich eines Druckbereichs des Behältertyps umfasst. Diese Angaben können dynamischer Natur sein, sich also regelmäßig verändern. Ferner umfasst das Verfahren nach dieser Ausführungsform ein Abrufen einer zweiten Information von der Datenbank unter Verwendung des Behältertyps, wobei die zweite Information in Abhängigkeit von dem Behältertyp die Geometrie des Kunststoffbehälters und optional ein Material des Behälters und optional die Information über die Bewegungsfähigkeit der Bewegungseinheit umfasst. Diese zweite Information ist quasi statischer Natur, wird also pro Behältertyp und Bewegungseinheit vorzugsweise nur einmalig festgelegt.

Das Bereitstellen der Informationen über den bereitgestellten Kunststoffbehälter, und/oder Informationen über einen Typ der Bewegungseinheit, und/oder Vorgaben bezüglich Druckvarianten kann somit anhand einer oder auch verschiedener Datenbanken erfolgen. Eine erste Datenbank weist z.B. erste Angaben auf, was z.B. bezüglich eines Behältertyps in welchem Bereich aufgedruckt werden soll. Dies kann auch eine Angabe umfassen, welche bzw. wie Teile der aufzudruckenden Information dynamisch für jeden Druckvorgang, d.h. für jeden Behälter verändert werden muss. Z.B. kann sich eine Seriennummer dynamisch ändern, was in dieser ersten Angabe entsprechend angegeben ist.

Eine zweite Datenbank weist z.B. zweite Angaben auf, welche spezifisch für einen Behältertyp (eine Behältertyp-ID) z.B. Angaben zur Behältergeometrie, Informationen über die Bewegungsfähigkeit der Bewegungseinheit wie z.B. mögliche Positionen oder Fahrkurven für Greifer zum Transport (zur Bewegung) des Behälters relativ zum Druckkopf (oder umgekehrt), oder mögliche Fahrkurven für eine relative Bewegung des Behälters und Druckkopfes aufweist. Die Bewegungsfähigkeit kann auch Angaben zu möglichen Geschwindigkeiten von Bewegungen umfassen. Letzteres kann den Vorteil haben, dass damit insbesondere spezifisch für einen Behältertyp der "Transportweg" bzw. Bewegungsweg gewählt werden kann, welcher den Behälter am effizientesten für den Druckvorgang bereitstellt bzw. mit welchem am effizientesten der Druckvorgang durchgeführt werden kann. So kann das Ziel sein, den Behälter möglichst rasch für den Druckvorgang bereitzustellen, damit eine etwaige Abkühlung nach der Entformung aus der Spritzgussmaschine nur minimiert werden kann. Während dem Druckvorgang kann somit eine optimierte Fahrkurve dazu verwendet werden, dass der Druckvorgang in möglichst kurzer Zeit am effektivsten durchgeführt wird.

In einem weiteren Beispiel kann z.B. für einen Behältertyp eine bestimmte Ausrichtung von Behälter und Druckkopf realisiert werden, wofür als Teil der Bewegungseinheit ein mittels einer so besagten Fahrkurve den Behälter in die geeignete Druckposition verbringt.

In einer Ausführungsform kann eine Datenverarbeitungseinheit für einen anstehenden Druckvorgang die erste Information aus der Datenbank auslesen. Anhand des aus der ersten Information entnommenen Behältertyps kann dann für diesen Typ aus der Datenbank die zweite Information ausgelesen werden. Anschließend erfolgt der Druckvorgang auf Basis der ersten und zweiten Information.

Die Aufteilung der Daten in die erste und zweite Information könnte den Vorteil haben, dass flexibel mit minimalen Ressourcenaufwand eine Steuerung eines Druckvorgangs ermöglicht wird. Bei bestehender Behältergeometrie genügt es, lediglich in der ersten Datenbank für neue Druckbilder die entsprechende erste Information dort einzupflegen. Alles was hingegen die mechanische Seite des Bedruckens anbelangt kann die Datenverarbeitungseinheit dann für den anstehenden Druckvorgang aus der zweiten Information entnehmen, ohne dass hierfür für unterschiedliche Druckbilder Änderungen vorgenommen werden müssten.

In einer Ausführungsform wird der Kunststoffbehälter durch Spritzgießen einer Kunststoffschmelze hergestellt, wobei der Schritt des Aufdruckens des bereitgestellten Druckbildes auf den Kunststoffbehälter ein Aufdrucken des bereitgestellten Druckbildes auf den Kunststoffbehälter, bevor der Kunststoffbehälter erkaltet ist, aufweist.

Dass das Druckbild dabei auf den Kunststoffbehälter aufgedruckt wird, bevor der Kunststoffbehälter erkaltet ist, bedeutet z.B., dass der Kunststoffbehälter unmittelbar (z.B. ca. 5-15 sec) dann bedruckt wird, nachdem dieser aus der entsprechenden Form beziehungsweise dem entsprechenden Formwerkzeug entnommen wurde "entformt wurde", jedoch noch bevor der Kunststoffbehälter wieder erkaltet ist (insbesondere bevor das zu bedruckende Kunststoffmaterial auf eine Temperatur von höchstens 30°C, vorzugsweise höchstens 40° und insbesondere von höchstens 60°C erkaltet ist) .

So erfordern Digitaldruckverfahren zum Aufdrucken eines Druckbildes für gewöhnlich ein Aktivieren einer zu bedruckenden Oberfläche, beispielsweise durch Erwärmen der entsprechenden Oberfläche, um eine Haftung der aufgebrachten Farben zu optimieren. Dies resultiert jedoch in einem zusätzlichen Energieverbrauch und kann zu Oberflächenveränderungen/Verfärbungen der entsprechenden Oberfläche, oder zu ungewünschten mechanischen Veränderungen der Kunststoffstruktur, beispielsweise bezüglich Härte oder Dehnbarkeit des Kunststoffes, führen. Dadurch, dass das Druckbild aufgedruckt wird, solange der Kunststoffschmelze und somit auch der Kunststoffbehälter noch warm ist, kann dieser Aktivierungsprozess jedoch unter Umständen entfallen, was in einer Einsparung von Energie und Kosten und einer Reduzierung des Beschädigungsrisikos resultiert.

Dabei kann das Druckbild auf den Kunststoffbehälter gedruckt werden, wenn der Kunststoffbehälter eine Temperatur zwischen 30°C und insbesondere 80°C, vorzugsweise zwischen 60°C und insbesondere 80°C aufweist. So besteht bei höheren Temperaturen die Gefahr, dass sich die Drucktinte in ungewollter Weise verändert (z.B. farblich oder auch bezüglich der Viskosität), wohingegen bei niedrigeren Temperaturen die Gefahr besteht, dass sich die Drucktinte nicht sauber mit dem Kunststoffbehälter verbindet.

Weiter kann das bereitgestellte Druckbild 5 s bis 15 s nachdem der Kunststoffbehälter aus einem Formwerkzeug entnommen wurde auf den Kunststoffbehälter gedruckt werden. Hierdurch kann sichergestellt werden, dass kein zusätzlicher Aktivierungsschritt erforderlich ist und der Kunststoffbehälter gleichzeitig eine Temperatur aufweist, bei der sich die Drucktinte nicht sauber mit dem Kunststoff verbindet. Aufgrund der kurzen Zeiten wird auch u.U. das Risiko minimiert, dass andere Umgebungsstoffe zwischenzeitlich mit der aktiven Kunststoffoberfläche reagieren, was die Hafteigenschaften der Drucktinte beeinflussen könnte. Ebenso wird das Risiko des Anhaftens von Fremdkörpern wie Stäuben bzw. anderer flüchtiger Bestandteile, der in der Kunststoffproduktion verwendeten Betriebsstoffe (Reinigungs-, Trennmittel, etc) vor dem Aufbringer der Bedruckung, deutlich verringert.

Ferner kann der bereitgestellte Kunststoffbehälter eine Vielzahl von Seitenwänden aufweisen, wobei bezüglich wenigstens zwei der Seitenwände das Empfangen des aufzudruckenden Druckbildes und das Ermitteln der benötigten relativen Bewegung erfolgt, wobei die wenigstens zwei Seitenwände nacheinander bedruckt werden, wobei, für alle der wenigstens zwei Seitenwände, nach dem Bedrucken der entsprechenden Seitenwand überprüft wird, ob die entsprechende bedruckte Seitenwand vorgegebene Qualitätsstandards bezüglich des Druckens erfüllt, und wobei, für alle der wenigstens zwei Seitenwände, der Druckvorgang nur dann auf einer auf die entsprechende Seitenwand folgenden Seite fortgesetzt wird, wenn die entsprechende bedruckte Seitenwand die vorgegebenen Qualitätsstandards erfüllt. Es sei angemerkt, dass auf die Seitenwände jeweils das gleiche oder unterschiedliche Druckbilder aufgedruckt werden können. Dementsprechend kann im Fall dessen das gleiche Druckbild auf mehreren der Seitenwände gedruckt werden soll das Druckbild auch nur einmalig empfangen werden. Grundsätzlich ist es möglich, dass für jeden Druckvorgang auf einer Seite des Behälters das Druckbild individuell empfangen wird.

Unter einer Seitenwand wird hierbei eine sich von einer Bodenplatte des Kunststoffbehälters aus erstreckende Außenwand des Kunststoffbehälters verstanden.

Unter Qualitätsvorgaben werden weiter vorgegebene Standards, welche das Druckbild mindestens erfüllen muss, um nicht verworfen zu werden, verstanden, beispielsweise hinsichtlich der Druckqualität. Folglich können fehlerhaft bedruckte Kunststoffbehälter verworfen werden, ohne dass zunächst das Abschließen des kompletten Druckvorganges abgewartet werden muss.

Mit einem weiteren Aspekt betrifft die Erfindung ein System zum Aufdrucken eines Druckbildes auf einen durch Spritzgießen hergestellten Kunststoffbehälter durch eine Druckvorrichtung, wobei das System eine Druckvorrichtung mit einer Bewegungseinheit und einem Druckkopf aufweist, wobei die Bewegungseinheit eine Bereitstellungseinheit aufweist, welche ausgebildet ist, einen durch Spritzgießen hergestellten Kunststoffbehälter bereitzustellen, und eine Ermittlungseinheit aufweist, welche ausgebildet ist, basierend auf einem bereitgestellten Druckbild eine benötigte relative Bewegung des Kunststoffbehälters und dem Druckkopf durch die Bewegungseinheit zu ermitteln, welche benötigt wird, um das Druckbild durch die Druckvorrichtung auf den Kunststoffbehälter aufzudrucken, wobei das System ausgebildet ist zum Bereitstellen des durch Spritzgießen hergestellten Kunststoffbehälters, Empfangen des auf den Kunststoffbehälter aufzudruckenden Druckbildes, basierend auf dem bereitgestellten Druckbild, Ermitteln einer benötigten relativen Bewegung des Kunststoffbehälters und dem Druckkopf durch die Bewegungseinheit, welche benötigt wird, um das Druckbild durch die Druckvorrichtung auf den Kunststoffbehälter aufzudrucken; und Aufdrucken des bereitgestellten Druckbildes auf den Kunststoffbehälter durch den Druckkopf, wobei das Aufdrucken des Druckbildes ein Steuern der Bewegungseinheit basierend auf der ermittelten benötigten Bewegung aufweist.

Es sei angemerkt, dass die obig beschriebenen Ausführungsformen der Erfindung in beliebiger Weise miteinander kombiniert werden können, solange sich die kombinierten Ausführungsformen nicht gegenseitig ausschließen.

Die Erfindung wird nun anhand der beigefügten Figuren näher erläutert.
Fig. 1 zeigt ein Flussdiagramm eines Verfahrens zum Aufdrucken eines Druckbildes auf einen durch Spritzgießen hergestellten Kunststoffbehälter durch eine Druckvorrichtung, gemäß Ausführungsformen der Erfindung;
Fig. 2 zeigt ein Flussdiagramm eines Verfahrens zum digitalen Drucken eines Druckbildes auf einen Kunststoffbehälter, gemäß Ausführungsformen der Erfindung;
Fig. 3 zeigt ein schematisches Blockschaltbild eines Systems zum Aufdrucken eines Druckbildes auf einen durch Spritzgießen hergestellten Kunststoffbehälter durch eine Druckvorrichtung, gemäß Ausführungsformen der Erfindung;
Fig. 4 zeigt ein schematisches Blockschaltbild eines Systems zum digitalen Drucken eines Druckbildes auf einen Kunststoffbehälter, gemäß Ausführungsformen der Erfindung.

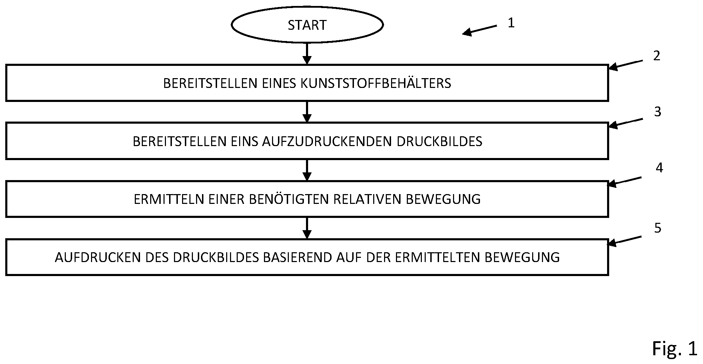

Fig. 1 zeigt ein Verfahren zum Aufdrucken eines Druckbildes auf einen unmittelbar zuvor durch Spritzgießen hergestellten Kunststoffbehälter durch eine Druckvorrichtung 1, wobei die Druckvorrichtung eine Bewegungseinheit und einen durch die Bewegungseinheit bewegbaren Druckkopf aufweist, und wobei das Verfahren einen Schritt 2 eines Bereitstellens eines durch Spritzgießen hergestellten Kunststoffbehälters, einen Schritt 3 eines Empfangens eines auf den Kunststoffbehälter aufzudruckenden Druckbildes, einen Schritt 4 eines Ermittelns einer benötigten relativen Bewegung von Behälter und Druckkopf mittels der Bewegungseinheit, welche benötigt wird, um das Druckbild durch die Druckvorrichtung auf den Kunststoffbehälter aufzudrucken, basierend auf dem bereitgestellten Druckbild, und einen Schritt 5 eines Aufdruckens des bereitgestellten Druckbildes auf den Kunststoffbehälter durch den Druckkopf aufweist, wobei das Aufdrucken des Druckbildes ein Steuern der Bewegungseinheit basierend auf der ermittelten benötigten Bewegung umfasst.

Bei dem Kunststoffbehälter kann es sich dabei insbesondere um einen Kunststoffbehälter für den Transport und die Lagerung von Industrieware handeln, beispielsweise Stapelbehälter, Sichtlagerkästen, Raumsparbehälter oder Kufenbehälter. Die Kunststoffbehälter können dabei zudem beispielsweise eine kubische oder konische Form und eine glatte oder strukturierte, beispielsweise mit Rippen verstärkte Außenfläche aufweisen.

Bei dem Spritzgussverfahren zum Herstellen des Kunststoffbehälters kann es sich ferner auch um Spritzgießsonderverfahren, beispielsweise Blasformen handeln.

Bei dem Druckbild kann es sich dabei zudem um einen eindimensionalen oder zweidimensionalen Barcode oder eine Seriennummer handeln, wobei entsprechende Vorlagen in einer Datenbank hinterlegt sein können. Basierend auf den aufgebrachten Barcodes oder Seriennummern kann dabei ferner anschließend auch eine automatische Lagerung von entsprechenden Kunststoffbehältern ermöglicht werden.

Der Schritt 5 des Aufdruckens des bereitgestellten Druckbildes auf den Kunststoffbehälter kann ferner ein Aufdrucken des Druckbildes inkl. der evtl. notwendigen Vorbehandlung sowie ein anschließendes Trocknen oder Nachbehandeln des Druckbildes (z.B. UV-Härten des Drucks) aufweisen.

Zudem kann das Druckbild nach Aufdrucken auf den Kunststoffbehälter einer Prüfung beziehungsweise Validierung unterzogen werden, beispielsweise durch einen basierend auf entsprechenden gelabelten Vergleichsdaten trainierten Klassifikator, wobei der Klassifikator trainiert sein kann, die Druckbilder und somit auch die entsprechenden Kunststoffbehälter als in Ordnung oder als nicht in Ordnung zu klassifizieren, und wobei die einzelnen Kunststoffbehälter anschließend basierend auf der Klassifizierung weitertransportiert werden können, beispielsweise über entsprechende Förderbänder, und als nicht in Ordnung klassifizierte Kunststoffbehälter ferner automatisch verworfen werden können. Die Prüfung kann dabei ferner einen Vergleich mit dem bereitgestellten, vorgegebenen Druckbild, eine Prüfung der Farben des aufgedruckten Druckbildes, oder eine Prüfung auf Beschädigungen des Kunststoffbehälters aufweisen.

Gemäß den Ausführungsformen der Fig. 1 weist der Schritt 4 des Ermittelns der benötigten Bewegung der Bewegungseinheit weiter ein Ermitteln der benötigten Bewegung Mittels der Bewegungseinheit basierend auf dem bereitgestellten Druckbild und einer Geometrie, insbesondere einer Oberflächengeometrie des Kunststoffbehälters auf.

Die Oberflächengeometrie des Kunststoffbehälters kann dabei durch Sensoren, beispielsweise optische Sensoren in einem Messvorgang erfasst werden kann. Ferner kann die Oberflächengeometrie aber auch in einer Datenbank hinterlegt sein und basierend auf einem dem Kunststoffbehälter zugeordneten Identifikator beziehungsweise einer dem Kunststoffbehälter zugeordneten Kennung abgerufen werden.

Dabei kann die benötigte Bewegung mittels der Bewegungseinheit zusätzlich auch auf allgemeinen Informationen basieren, z.B. über den bereitgestellten Kunststoffbehälter, beispielsweise über einen Randbereich des Kunststoffbehälters, welcher nicht bedruckt werden soll, über Informationen über einen Typ der Bewegungseinheit, und/oder Vorgaben bezüglich Druckvarianten, beispielsweise Vorgaben, ob ein Farb- oder schwarz-weiß-Druck erfolgen soll. Entsprechende Informationen können wiederum in einer Datenbank hinterlegt sein , wobei die entsprechenden Informationen beispielsweise wiederum basierend auf einem der Bewegungseinheit zugeordneten Identifikator beziehungsweise einer der Bewegungseinheit zugeordneten Kennung und/oder basierend auf einem dem Kunststoffbehälter zugeordneten Identifikator beziehungsweise einer dem Kunststoffbehälter zugeordneten Kennung abgerufen werden können.

Gemäß den Ausführungsformen der Fig. 1 weist der Schritt 4 des Ermittelns der benötigten Bewegung der Bewegungseinheit dabei weiter ein Ermitteln der benötigten Bewegung derart, dass das bereitgestellte Druckbild nicht auf einer Außenfläche des Kunststoffbehälters aufgebrachte Rippen aufgedruckt wird, auf. Es werden hier die Rippen beim Druck ausgespart.

Ferner kann die benötigte Bewegung der Bewegungseinheit auch derart ermittelt werden, dass das aufgedruckte Druckbild einen Abstand von weniger als 5 mm und bevorzugt von weniger als 2 mm oder weniger als 1 mm zu Rippen aufweist.

In einer einfachen Variante wird nur eine einzelne Seite des Behälters bedruckt. In einer anderen Variante werden mehrere Seiten bedruckt. Z,B. weist der bereitgestellte Kunststoffbehälter 4 Seitenwände auf, wobei ein jeweils bereitgestelltes Druckbild auf wenigstens zwei der Seitenwände aufgedruckt wird, wobei die wenigstens zwei Seitenwände nacheinander bedruckt werden. Nach jedem Druckvorgang auf eine der Seitenwände geprüft, ob die entsprechende bedruckte Seitenwand vorgegebene Qualitätsstandards erfüllt. Nur wenn dies der Fall ist, wird der Druck der nächsten Seitenwand fortgesetzt.

Zudem wird der Kunststoffbehälter durch Spritzgießen einer Kunststoffschmelze hergestellt, wobei der Schritt 5 des Aufdruckens des bereitgestellten Druckbildes auf den Kunststoffbehälter ein Aufdrucken des bereitgestellten Druckbildes auf den Kunststoffbehälter, bevor der Kunststoffbehälter erkaltet ist, aufweist.

Dabei wird das bereitgestellte Druckbild auf den Kunststoffbehälter gedruckt, wenn der Kunststoffbehälter nach dem Entformen aus dem Spritzgusswerkzeug eine Temperatur zwischen 30°C und 80°C und vorzugsweise eine Temperatur zwischen 60°C und 80°C aufweist. Beispielsweise kann das Druckbild unmittelbar nach dem Entformen aufgedruckt werden, d.h. ohne einen zwischen dem Entformen und dem Bedrucken liegenden Verarbeitungsschritt..

Bei dem zugrundeliegenden Kunststoff kann es sich dabei beispielsweise um Polyolefine, wie Polyethylen oder Polypropylen, sowie entsprechende Mischungen und/oder Rezyklate handeln.

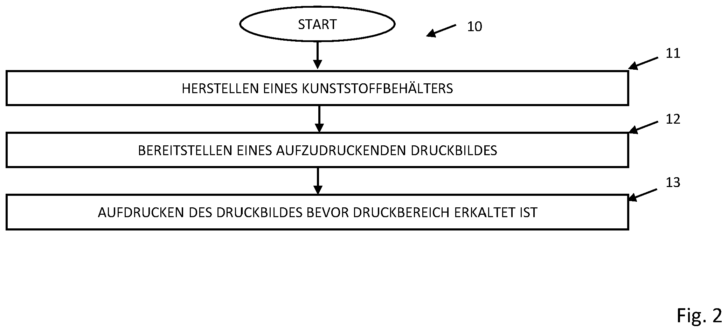

Fig. 2 zeigt ein Flussdiagramm eines Verfahrens zum digitalen Drucken eines Druckbildes auf einen Kunststoffbehälter 10, gemäß Ausführungsformen der Erfindung.

Insbesondere zeigt Fig. 2 ein Verfahren zum digitalen Drucken eines Druckbildes auf einen Kunststoffbehälter 10, wobei der Kunststoffbehälter durch ein Spritzgussverfahren hergestellt wird, und wobei das Bedrucken des Kunststoffbehälters während des Herstellens des Kunststoffbehälters erfolgt, und wobei das Verfahren 10 einen Schritt 11 eines Herstellen eines Kunststoffbehälters durch Spritzgießen einer Kunststoffschmelze, einen Schritt 12 eines Empfangens eines auf den Kunststoffbehälter aufzudruckenden Druckbildes, und einen Schritt 13 eines digitalen Druckens des Druckbildes auf den Kunststoffbehälter aufweist, wobei die Daten aufgedruckt werden, bevor der Kunststoffbehälter erkaltet ist, aufweist.

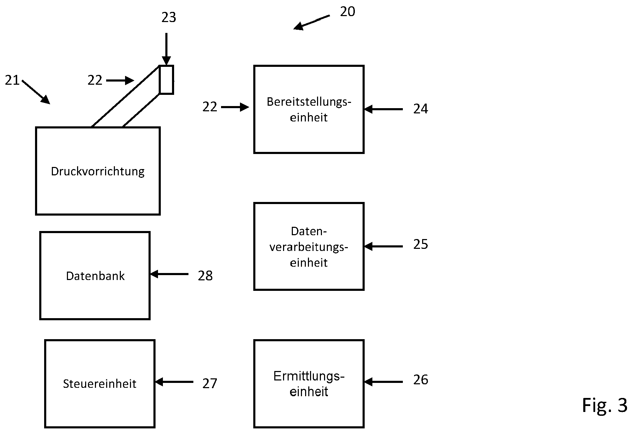

Fig. 3 zeigt ein schematisches Blockschaltbild eines Systems zum Aufdrucken eines Druckbildes auf einen durch Spritzgießen hergestellten Kunststoffbehälter durch eine Druckvorrichtung 20, gemäß Ausführungsformen der Erfindung.

Wie Fig. 3 zeigt, weist das System 20 dabei eine Druckvorrichtung 21 mit einer Bewegungseinheit 22 und einem durch die Bewegungseinheit 22 bewegbaren Druckkopf 23 auf. Dabei ist die Bewegungseinheit 22 insbesondere ausgebildet, den Druckkopf 23 entlang wenigstens einer vertikale verschiebbaren horizontalen Linearachse hin- und herzubewegen, wobei die Bewegungseinheit 22 durch entsprechende Aktoren durch eine Steuereinheit 27 gesteuert werden kann.

Zudem weist das dargestellte System eine Bereitstellungseinheit 24 auf, welche ausgebildet ist, einen durch Spritzgießen hergestellten Kunststoffbehälter für den Druckvorgang bereitzustellen, also insbesondere zum Druckkopf 23 hinbewegt zu werden. Bei der Bereitstellungseinheit kann es sich dabei insbesondere um eine ein Förderband aufweisende und entlang wenigstens eine Richtung verfahrbare Transfereinrichtung handeln. Diese kann z.B. den entformten Behälter vom Spritzgusswerkzeug zur Druckvorrichtung 21 bewegen. Die Bereitstellungseinheit 24 kann hierbei Teil der Bewegungseinheit 22 sein.

Eine Datenverarbeitungseinheit 25 kann ferner vorgesehen sein, welche ausgebildet ist, ein auf den Kunststoffbehälter aufzudruckendes Druckbild bereitzustellen. Z.B. kann diese Datenverarbeitungseinheit insbesondere dynamisch für jeden zu bedruckenden Behälter das Druckbild bestimmen. Dies kann z.B. ein QR- oder Barcode sein oder eine Seriennummer oder auch eine beliebige Textangabe oder ein beliebiges Bild.

Eine Ermittlungseinheit 26 ist ferner vorgesehen, welche ausgebildet ist, basierend auf dem bereitgestellten Druckbild eine benötigte relative Bewegung von Behälter und Druckkopf 23 mittels der Bewegungseinheit 22 zu bestimmen, welche benötigt wird, um das Druckbild durch die Druckvorrichtung auf den Kunststoffbehälter aufzudrucken.

Die eigentliche Steuerung des Druckvorgangs und des Bewegungsvorgangs mittels des Druckkopfes 23 bzw. der Bewegungseinheit kann dann auf Basis der durch die Ermittlungseinheit 26 bestimmten relativen Bewegung durch die Steuereinheit 27 erfolgen.

Optional vorgesehen ist ferner eine Datenbank 28. Diese kann dazu dienen, ersten Information bezüglich des zu bedruckenden Kunststoffbehälters zu speichern, wobei die erste Information einen Behältertyp und Angaben bezüglich des Druckbildes und optional Angaben bezüglich eines Druckbereichs des Behältertyps umfasst. Ferner kann diese Datenbank 28 zweiten Informationen zu dem Behältertyp (jedem Behältertyp) enthalten. Die zweite Information kann in Abhängigkeit von dem Behältertyp die Geometrie des zu bedruckenden Kunststoffbehälters und optional ein Material des Behälters und optional eine Information über die Bewegungsfähigkeit der Bewegungseinheit 22 umfassen.

Für einen anstehenden Druckvorgang kann z.B. die Datenverarbeitungseinheit 25 aus der Datenbank 28 die erste und zweite Information abrufen und der Ermittlungseinheit 26 zur Verfügung stellen. Die Ermittlungseinheit bestimmt dann basierend hierauf für diesen Druckvorgang Daten für den benötigen Bewegungsvorgang der Bewegungseinheit 22 und auch Steuerinformation, mittels welcher der Druckkopf zur Durchführung des Druckvorgangs gesteuert wird. Die Steuereinheit 27 steuert dann den Druckkopf und die Bewegungsvorrichtung unter Verwendung der Daten für den benötigen Bewegungsvorgang und der Steuerinformation.

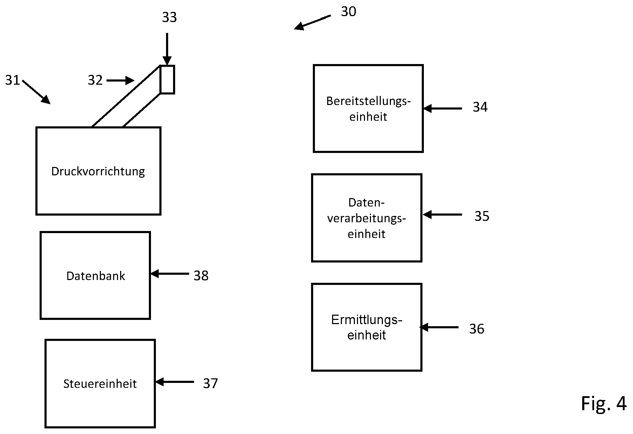

Fig. 4 zeigt ein schematisches Blockschaltbild eines Systems zum digitalen Drucken eines Druckbildes auf einen Kunststoffbehälter. Hierbei weist das System 30 eine Druckvorrichtung 31 mit einer Bewegungseinheit 32 und einer durch die Bewegungseinheit 32 beweglichen Druckkopf 33 auf. Dabei ist der Bewegungseinheit 32 insbesondere wiederum ausgebildet, den Druckkopf 33 entlang wenigstens einer vertikalen verschiebbaren horizontalen Linearachse hin- und herzubewegen, wobei der Bewegungseinheit 32 durch entsprechende Aktoren und eine Steuereinheit 37 gesteuert werden kann.

Wie Fig. 4 weiter zeigt, weist das System 30 zudem eine Spritzgussmaschine 34 zum Herstellen eines Kunststoffbehälters durch Spritzgießen einer Kunststoffschmelze auf, wobei die Spritzgussmaschine 34 ausgebildet ist, die Kunststoffschmelze in eine entsprechende Form beziehungsweise ein entsprechendes Formwerkzeug, insbesondere Formhälften einzuspritzen und den die Formhälften anschließend wieder zu öffnen und zu entformen, wobei der Kunststoffbehälter seine Form beibehält. Das Entformen kann auch durch die Bewegungseinheit 32 erfolgen.

Mittels einer optionalen Bereitstellungseinheit 34 kann der durch Spritzgießen hergestellte Kunststoffbehälter für den Druckvorgang bereitgestellt werden, also insbesondere zum Druckkopf 33 hinbewegt zu werden. Bezüglich der Bereitstellungseinheit 34 gelten analog die zu Figur 3 zuvor gemachten Ausführungen, insbesondere auch die Tatsache, dass die Bereitstellungseinheit 34 Teil der Bewegungseinheit 32 sein kann. Die Bereitstellungseinheit 34 kann z.B. ein Förderband aufweisen, um einen durch die Spritzgussmaschine hergestellten Kunststoffbehälter zu der Druckvorrichtung 31 zu transportieren.

Ebenso kann analog zu den Ausführungen der Figur 3 eine Datenverarbeitungseinheit 35 vorgesehen sein, welche ausgebildet ist, ein auf den Kunststoffbehälter aufzudruckendes Druckbild bereitzustellen. Selbiges gilt für die Ermittlungseinheit 36, welche ausgebildet ist, basierend auf dem bereitgestellten Druckbild eine benötigte relative Bewegung von Behälter und Druckkopf 33 mittels der Bewegungseinheit 32 zu bestimmen, welche benötigt wird, um das Druckbild durch die Druckvorrichtung auf den Kunststoffbehälter aufzudrucken.

Die Druckvorrichtung 31 ist ausgebildet, Daten auf den Kunststoffbehälter zu drucken, bevor der Kunststoffbehälter erkaltet ist. Insbesondere erfolgt der Druck unmittelbar nach dem Entformen des Kunststoffbehälters, wenn der nach dem Entformen noch vorherrschende Temperaturbereich des zu bedruckenden Bereichs des Behälters zwischen 30°C und 80°C und vorzugsweise zwischen 40°C und 80°C und besonders bevorzugt zwischen 60°C und 80°C liegt. In diesem Temperaturbereichen ist die Kunststoffoberfläche bereits in einem aktivieren Zustand, sodass ggf. z.B. eine zusätzliche Plasma- oder Flammenaktivierung der Oberfläche zur Vorbereitung für den Druck entfallen kann oder aber deren Einsatz reduziert werden kann (Energieersparnis).

Die eigentliche Steuerung des Druckvorgangs und des Bewegungsvorgangs mittels des Druckkopfes 33 bzw. der Bewegungseinheit kann wiederum auf Basis der durch die Ermittlungseinheit 36 bestimmten relativen Bewegung durch die Steuereinheit 37 erfolgen.

Optional vorgesehen ist ferner eine Datenbank 38, wie entsprechend zu Figur 3 diskutiert.

## Patentansprüche

1. Verfahren zum Aufdrucken eines Druckbildes auf einen durch Spritzgießen hergestellten Kunststoffbehälter durch eine Druckvorrichtung (1), wobei die Druckvorrichtung eine Bewegungseinheit (22, 32) und mindestens einen Druckkopf (23, 33) aufweist, und wobei das Verfahren (1) folgende Schritte aufweist:
- Bereitstellen eines durch Spritzgießen hergestellten Kunststoffbehälters (2);
- Empfangen eines auf den Kunststoffbehälter aufzudruckenden Druckbildes (3);
- Basierend auf dem bereitgestellten Druckbild, Ermitteln einer benötigten relativen Bewegung des Kunststoffbehälters und des Druckkopfes durch die Bewegungseinheit, welche benötigt wird, um das Druckbild durch die Druckvorrichtung auf den Kunststoffbehälter aufzudrucken (4); und
- Aufdrucken des bereitgestellten Druckbildes auf den Kunststoffbehälter durch den Druckkopf, wobei das Aufdrucken des Druckbildes ein Steuern der Bewegungseinheit basierend auf der ermittelten benötigten Bewegung aufweist (5),
**dadurch gekennzeichnet, dass**
der Schritt des Ermittelns der benötigten Bewegung der Bewegungseinheit ein Ermitteln der benötigten Bewegung derart, dass das bereitgestellte Druckbild nicht auf einer Außenfläche des Kunststoffbehälters angeordneten Rippen aufgedruckt wird, umfasst.

2. Verfahren nach Anspruch 1, wobei der Schritt des Ermittelns der benötigten Bewegung der Bewegungseinheit ein Ermitteln der benötigten Bewegung der Bewegungseinheit basierend auf dem bereitgestellten Druckbild und einer Geometrie des Kunststoffbehälters umfasst, insbesondere eine Oberflächengeometrie des Kunststoffbehälters umfasst.

3. Verfahren nach einem der Ansprüche 1 bis 2, wobei die benötigte Bewegung der Bewegungseinheit zusätzlich basierend auf Informationen über eine Bewegungsfähigkeit der Bewegungseinheit, und/oder Vorgaben bezüglich einer zum Aufdrucken verwendeten Druckvariante ermittelt wird.

4. Verfahren nach einem der vorigen Ansprüche 2-3, ferner umfassend:
- Abrufen einer ersten Information bezüglich des zu bedruckenden Kunststoffbehälters von einer Datenbank, wobei die erste Information einen Behältertyp und optional Angaben bezüglich des Druckbildes und optional Angaben bezüglich eines Druckbereichs des Behältertyps umfasst,
- Abrufen einer zweiten Information von der Datenbank unter Verwendung des Behältertyps, wobei die zweite Information in Abhängigkeit von dem Behältertyp die Geometrie des Kunststoffbehälters und optional ein Material des Behälters und optional die Information über die Bewegungsfähigkeit der Bewegungseinheit umfasst,
wobei das Ermitteln der benötigten Bewegung unter Verwendung zumindest der zweiten und optional der ersten Information erfolgt.

5. Verfahren nach einem der vorigen Ansprüche, wobei der Kunststoffbehälter durch Spritzgießen einer Kunststoffschmelze hergestellt wird, und wobei der Schritt des Aufdruckens des bereitgestellten Druckbildes auf den Kunststoffbehälter durchgeführt wird, bevor der Kunststoffbehälter erkaltet ist.

6. Verfahren nach einem der vorigen Ansprüche, wobei der bereitgestellte Kunststoffbehälter eine Vielzahl von Seitenwänden aufweist, wobei bezüglich wenigstens zwei der Seitenwände das Empfangen des aufzudruckenden Druckbildes (3) und das Ermitteln der benötigten relativen Bewegung erfolgt, wobei die wenigstens zwei Seitenwände nacheinander bedruckt werden, wobei, für alle der wenigstens zwei Seitenwände, nach dem Bedrucken der entsprechenden Seitenwand überprüft wird, ob die entsprechende bedruckte Seitenwand vorgegebene Qualitätsstandards erfüllt, und wobei, für alle der wenigstens zwei Seitenwände, der Druckvorgang nur auf einer auf die entsprechende Seitenwand zum Bedrucken folgenden Seite fortgesetzt wird, wenn die entsprechende bereits bedruckte Seitenwand die vorgegebenen Qualitätsstandards erfüllt.

7. Verfahren nach einem der vorigen Ansprüche, wobei das Druckverfahren ein Inkjet-Verfahren umfasst oder ist.

8. Verfahren nach einem der vorigen Ansprüche, wobei das Druckbild auf den Kunststoffbehälter dann gedruckt wird, wenn die Temperatur des Kunststoffbehälters, welche aus einer dem Druckverfahren unmittelbar vorangegangenen Spritzgussherstellung des Kunststoffbehälters resultiert, einen Wert zwischen 30°C und 80°C aufweist, bevorzugt zwischen 40°C und 80°C und besonderes bevorzugt zwischen 60°C und 80°C aufweist.

9. Verfahren nach einem der vorigen Ansprüche, wobei das Druckbild auf den Kunststoffbehälter dann gedruckt wird, wenn seit der Entformung des Kunststoffbehälters, welche aus einer dem Druckverfahren unmittelbar vorangegangenen Spritzgussherstellung des Kunststoffbehälters resultiert, 5 bis 15 s vergangen sind.

10. System zum Aufdrucken eines Druckbildes auf einen durch Spritzgießen hergestellten Kunststoffbehälter durch eine Druckvorrichtung (20), wobei das System (20) eine Druckvorrichtung (21, 31) mit einer Bewegungseinheit (22, 32) und einen Druckkopf (23, 33) aufweist, wobei die Bewegungseinheit (22, 32) eine Bereitstellungseinheit (24, 34) aufweist, welche ausgebildet ist, einen durch Spritzgießen hergestellten Kunststoffbehälter bereitzustellen und eine Ermittlungseinheit (26, 36) aufweist, welche ausgebildet ist, basierend auf einem bereitgestellten Druckbild eine benötigte relative Bewegung des Kunststoffbehälters und des Druckkopfes durch die Bewegungseinheit zu ermitteln, welche benötigt wird, um das Druckbild durch die Druckvorrichtung (20) auf den Kunststoffbehälter aufzudrucken, wobei das System (20) ausgebildet ist zum:
- Bereitstellen des durch Spritzgießen hergestellten Kunststoffbehälters (2);
- Empfangen des auf den Kunststoffbehälter aufzudruckenden Druckbildes (3);
- Basierend auf dem empfangenen Druckbild, Ermitteln einer benötigten relativen Bewegung des Kunststoffbehälters und des Druckkopfes durch die Bewegungseinheit, welche benötigt wird, um das Druckbild durch die Druckvorrichtung auf den Kunststoffbehälter aufzudrucken (4); und
- Aufdrucken des Druckbildes auf den Kunststoffbehälter durch den Druckkopf, wobei das Aufdrucken des Druckbildes ein Steuern der Bewegungseinheit basierend auf der ermittelten benötigten Bewegung umfasst (5),
**dadurch gekennzeichnet, dass**
der Schritt des Ermittelns der benötigten Bewegung der Bewegungseinheit ein Ermitteln der benötigten Bewegung derart, dass das bereitgestellte Druckbild nicht auf einer Außenfläche des Kunststoffbehälters angeordneten Rippen aufgedruckt wird, umfasst.

## Claims

1. Method for printing, by a printing device (1), a printed image onto a plastic container produced by injection moulding, wherein the printing device has a movement unit (22, 32) and at least one printhead (23, 33), and wherein the method (1) has the following steps:
- providing a plastic container (2) produced by injection moulding;
- receiving a printed image (3) to be printed onto the plastic container;
- based on the provided printed image, determining a required relative movement of the plastic container and of the printhead by the movement unit, which is required in order to print the printed image by the printing device onto the plastic container (4); and
- printing the provided printed image onto the plastic container by the printhead, wherein the printing of the printed image comprises a control of the movement unit on the basis of the determined required movement (5),
**characterised in that**
the step of determining the required movement of the movement unit comprises a determination of the required movement in such a way that the provided printed image is not printed onto ribs arranged on an outer surface of the plastic container.

2. The method according to claim 1, wherein the step of determining the required movement of the movement unit comprises a determination of the required movement of the movement unit on the basis of the provided printed image and a geometry of the plastic container, in particular a surface geometry of the plastic container.

3. The method according to either one of claims 1 to 2,
wherein the required movement of the movement unit is determined additionally on the basis of information about a movability of the movement unit, and/or specifications with regard to a printing variant used for the printing.

4. The method according to any one of preceding claims 2-3, further comprising:
- calling up, from a database, first information relating to the plastic container to be printed, wherein the first information comprises a container type and optionally details with regard to the printed image and optionally details with regard to a print region of the container type,
- calling up second information from the database using the container type, wherein the second information, in dependence on the container type, comprises the geometry of the plastic container and optionally a material of the container and optionally the information about the movability of the movement unit,
wherein the required movement is determined using at least the second and optionally the first information.

5. The method according to any one of the preceding claims, wherein the plastic container is produced by injection moulding a plastic melt, and wherein the step of printing the provided printed image onto the plastic container is carried out before the plastic container has cooled down.

6. The method according to any one of the preceding claims, wherein the provided plastic container has a plurality of side walls, wherein the printed image (3) to be printed is received and the required relative movement is determined in respect of at least two of the side walls, wherein the at least two side walls are printed one after the other, wherein, for all of the at least two side walls, once the corresponding side wall has been printed it is checked whether the corresponding printed side wall satisfies specified quality standards, and wherein, for all of the at least two side walls, the printing process is continued on a side following the corresponding side wall for printing only if the corresponding side wall already printed satisfies the specified quality standards.

7. The method according to any one of the preceding claims, wherein the printing method comprises or is an inkjet method.

8. The method according to any one of the preceding claims, wherein the printed image is printed onto the plastic container when the temperature of the plastic container resulting from a production of the plastic container by injection moulding directly preceding the printing method has a value between 30°C and 80°C, preferably between 40°C and 80°C, and particularly preferably between 60°C and 80°C.

9. The method according to any one of the preceding claims, wherein the printed image is printed onto the plastic container when 5 to 15 s have passed since the demoulding of the plastic container resulting from a production of the plastic container by injection moulding directly preceding the printing method.

10. A system for printing, by a printing device (20), a printed image onto a plastic container produced by injection moulding, wherein the system (20) has a printing device (21, 31) with a movement unit (22, 32) and a printhead (23, 33), wherein the movement unit (22, 32) has a provision unit (24, 34) which is configured to provide a plastic container produced by injection moulding and has a determination unit (26, 36) which is configured to determine, on the basis of a provided printed image, a required relative movement of the plastic container and of the printhead by the movement unit, which is required in order to print the printed image by the printing device (20) onto the plastic container, wherein the system (20) is configured to:
- provide the plastic container (2) produced by injection moulding;
- receive the printed image (3) to be printed onto the plastic container;
- determine, on the basis of the received printed image, a required relative movement of the plastic container and of the printhead by the movement unit, which is required in order to print (4) the printed image onto the plastic container by the printing device; and
- print the printed image onto the plastic container by the printhead, wherein the printing of the printed image comprises a control of the movement unit on the basis of the determined required movement (5),
**characterised in that**
the step of determining the required movement of the movement unit comprises a determination of the required movement in such a way that the provided printed image is not printed onto ribs arranged on an outer surface of the plastic container.

## Revendications

1. Procédé d'impression, par un dispositif d'impression (1), d'une image imprimée sur un récipient en plastique produit par moulage par injection, dans lequel le dispositif d'impression a une unité de mouvement (22, 32) et au moins une tête d'impression (23, 33), et dans lequel le procédé (1) comprend les étapes suivantes consistant à :
- fournir un récipient en plastique (2) produit par moulage par injection ;
- recevoir une image imprimée (3) à imprimer sur le récipient en plastique ;
- en se basant sur l'image imprimée fournie, déterminer un mouvement relatif exigé du récipient en plastique et de la tête d'impression par l'unité de mouvement, qui est exigé afin de faire imprimer l'image imprimée par le dispositif d'impression sur le récipient en plastique (4) ; et
- faire imprimer l'image imprimée fournie sur le récipient en plastique par la tête d'impression, dans lequel l'impression de l'image imprimée comprend une commande de l'unité de mouvement sur la base du mouvement exigé déterminé (5),
**caractérisé en ce que**
l'étape consistant à déterminer le mouvement exigé de l'unité de mouvement comprend une détermination du mouvement exigé de telle sorte que l'image imprimée fournie n'est pas imprimée sur les nervures agencées sur une surface externe du récipient en plastique.

2. Procédé selon la revendication 1, dans lequel l'étape consistant à déterminer le mouvement exigé de l'unité de mouvement comprend une détermination du mouvement exigé de l'unité de mouvement sur la base de l'image imprimée fournie et une géométrie du récipient en plastique, en particulier une géométrie de surface du récipient en plastique.

3. Procédé selon l'une ou l'autre des revendications 1 à 2, dans lequel le mouvement exigé de l'unité de mouvement est déterminé de plus sur la base d'informations au sujet d'une mobilité de l'unité de mouvement, et/ou des spécifications concernant une variante d'impression utilisée pour l'impression.

4. Procédé selon l'une quelconque des revendications 2 à 3 précédentes, comprenant en outre les étapes consistant à :
- appeler, depuis une base de données, des premières informations relatives au récipient en plastique à imprimer, dans lequel les premières informations comprennent un type de récipient et éventuellement des détails relatifs à l'image imprimée et éventuellement des détails relatifs à une région d'impression du type de récipient,
- appeler des secondes informations depuis la base de données en utilisant le type de récipient, dans lequel les secondes informations, en fonction du type de récipient, comprennent la géométrie du récipient en plastique et éventuellement un matériau du récipient et éventuellement les informations au sujet de la mobilité de l'unité de mouvement,
dans lequel le mouvement exigé est déterminé en utilisant au moins les secondes et éventuellement les premières informations.

5. Procédé selon l'une quelconque des revendications précédentes, dans lequel le récipient en plastique est produit par moulage par injection d'un mélange fondu de plastique, et dans lequel l'étape consistant à imprimer l'image imprimée fournie sur le récipient en plastique est mise en œuvre avant que le récipient en plastique n'ait refroidi.

6. Procédé selon l'une quelconque des revendications précédentes, dans lequel le récipient en plastique fourni a une pluralité de parois latérales, dans lequel l'image imprimée (3) à imprimer est reçue et le mouvement relatif exigé est déterminé par rapport à au moins deux des parois latérales, dans lequel les au moins deux parois latérales sont imprimées l'une après l'autre, dans lequel, pour l'ensemble des au moins deux parois latérales, une fois que la paroi latérale correspondante a été imprimée, il est contrôlé si la paroi latérale imprimée correspondante satisfait à des normes de qualité spécifiées, et dans lequel, pour l'ensemble des au moins deux parois latérales, le processus d'impression est poursuivi sur un côté suivant la paroi latérale correspondante pour imprimer uniquement si la paroi latérale correspondante déjà imprimée satisfait aux normes de qualité spécifiées.

7. Procédé selon l'une quelconque des revendications précédentes, dans lequel le procédé d'impression comprend ou est un procédé par jet d'encre.

8. Procédé selon l'une quelconque des revendications précédentes, dans lequel l'image imprimée est imprimée sur le récipient en plastique lorsque la température du récipient en plastique résultant d'une production du récipient plastique par moulage par injection précédant directement le procédé d'impression a une valeur entre 30 °C et 80 °C, de préférence entre 40 °C et 80 °C, et particulièrement préférentiellement entre 60 °C et 80 °C.

9. Procédé selon l'une quelconque des revendications précédentes, dans lequel l'image imprimée est imprimée sur le récipient en plastique lorsque 5 à 15 secondes se sont écoulées depuis le démoulage du récipient en plastique résultant d'une production du récipient en plastique par moulage par injection précédant directement le procédé d'impression.

10. Système destiné à l'impression, par un dispositif d'impression (20), d'une image imprimée sur un récipient en plastique produit par moulage par injection, dans lequel le système (20) a un dispositif d'impression (21, 31) avec une unité de mouvement (22, 32) et une tête d'impression (23, 33), dans lequel l'unité de mouvement (22, 32) a une unité de fourniture (24, 34) qui est configurée pour fournir un récipient en plastique produit par moulage par injection et a une unité de détermination (26, 36) qui est configurée pour déterminer, sur la base d'une image imprimée fournie, un mouvement relatif exigé du récipient en plastique et de la tête d'impression par l'unité de mouvement, qui est exigé afin de faire imprimer l'image imprimée par le dispositif d'impression (20) sur le récipient en plastique, dans lequel le système (20) est configuré pour :
- fournir le récipient en plastique (2) produit par moulage par injection ;
- recevoir l'image imprimée (3) à imprimer sur le récipient en plastique ;
- déterminer, sur la base de l'image imprimée reçue, un mouvement relatif exigé du récipient en plastique et de la tête d'impression par l'unité de mouvement, qui est exigé afin de faire imprimer (4) l'image imprimée sur le récipient en plastique par le dispositif d'impression ; et
- faire imprimer l'image imprimée sur le récipient en plastique par la tête d'impression, dans lequel l'impression de l'image imprimée comprend une commande de l'unité de mouvement sur la base du mouvement exigé déterminé (5),
**caractérisé en ce que**
l'étape consistant à déterminer le mouvement exigé de l'unité de mouvement comprend une détermination du mouvement exigé de telle sorte que l'image imprimée fournie n'est pas imprimée sur les nervures agencées sur une surface externe du récipient en plastique.
